# EUROPÄISCHE PATENTSCHRIFT

(11) **EP 0 573 740 B1**
(45) Veröffentlichungstag und Bekanntmachung des Hinweises auf die Patenterteilung: **15.05.1996**
(21) Anmeldenummer: 93104112.3
(22) Anmeldetag: 13.03.1993
(51) Int. Cl.: A01C 7/08

(54) **Sämaschine mit Fahrgassenschaltung**
Seed drill with tramlining device
Semoir avec circuit de passages de circulation

(30) Priorität: 10.06.1992 DE 9207781 U
(43) Veröffentlichungstag der Anmeldung: 15.12.1993
(73) Patentinhaber: Rabewerk GmbH + Co., D-49152 Bad Essen (DE)
(72) Erfinder: Gerdom, Friedrich, Dipl.-Ing., W-4515 Bad Essen (DE)
(74) Vertreter: Missling, Arne, Dipl.-Ing.

(56) Entgegenhaltungen:
- EP-A- 0 176 023
- FR-A- 2 642 797

## Beschreibung

Die Erfindung bezieht sich auf eine Sämaschine mit Fahrgassenschaltung, mit mehreren selektiv schaltbaren Särohren und seitlichen, schwenkbar gelagerten Spurreißern, welche mittels einer hydraulisch betätigbaren Umschalteinrichtung verschwenkbar sind, wobei die Umschalteinrichtung mindestens einen Hydraulikzylinder und eine Schalteinrichtung umfaßt.

Eine Sämaschine der genannten Art ist beispielsweise aus der DE-OS 30 25 176 bekannt.

Bei Sämaschinen ist es üblich, eine hydraulisch betätigbare Fahrgassenschaltung vorzusehen, welche von Spurreißern aktiviert wird. Durch die Fahrgassenschaltung wird die Saatgutzufuhr zu den Särohren periodisch ab- und wieder zugeschaltet, so daß Fahrspuren gebildet werden, in welchen kein Saatgut abgelegt ist. Bei derartigen Fahrgassenschaltungen ist ermöglicht, daß der Benutzer der Sämaschine diese, beispielsweise mit Hilfe des Schlepperkrafthebers am Feldende zum Wenden anheben kann. Während dieses Wendevorganges erfolgt eine Umschaltung der Spurreißer, wobei einer der Spurreißer angehoben wird, während der andere abgesenkt wird. Nunmehr kann der Benutzer in entgegengesetzter Fahrtrichtung den nächsten Streifen des Feldes einsäen.

Bei der aus der DE-OS 30 25 176 bekannten Sämaschine erfolgt die Betätigung der Fahrgassenschaltung hydraulisch.

Bei solchen Betätigungen wird das erforderliche Schaltsignal für die Fahrgassenschaltung bekannterweise mittels eines Magnetsensors bzw. eines Kontaktgebers erzeugt, der mit der Mechanik der Spurreißer kombiniert ist. Diese Lösungen können den Nachteil aufweisen, daß die Signalgeber an Bereichen der Sämaschine angebracht sind, welche nicht ausreichend vor Beschädigungen geschützt sind. Weiterhin ist ein entsprechender Aufwand erforderlich, um die Zuleitungen zu den Gebern vor Beschädigungen zu schützen.

Der Erfindung liegt die Aufgabe zugrunde, eine Sämaschine mit Fahrgassenschaltung der eingangs genannten Art zu schaffen, welche bei einfachem Aufbau und betriebssicherer Handhabbarkeit die Nachteile des Standes der Technik vermeidet und Fehlfunktionen ausschließt.

Erfindungsgemäß wird die Aufgabe dadurch gelöst, daß in einer Hydraulikleitung zu dem Hydraulikzylinder ein Druckschalter angeordnet ist, welcher zur Abgabe eines Schaltsignales mit der Schalteinrichtung verbunden ist, wodurch ein Schaltsignal an die Fahrgassenschaltung abgegeben werden kann.

Die erfindungsgemäße Sämaschine zeichnet sich durch eine Reihe erheblicher Vorteile aus. Die Verwendung eines Druckschalters gestattet es zum einen, ein kostengünstiges, vielfach erprobtes Bauelement zu verwenden, welches sich durch ein hohes Maß an Einfachheit und Robustheit auszeichnet und damit eine große Betriebssicherheit gewährleistet.

Ein weiterer, wesentlicher Vorteil der Verwendung eines Druckschalters liegt darin, daß dieser an beliebiger Stelle in dem Hydraulikkreislauf eingesetzt werden kann, so daß es möglich ist, den Druckschalter vor Beschädigungen zu schützen. Insbesondere ist es nicht erforderlich, diesen direkt im Bereich beweglicher Teile des Klinkwerkes der Spurreißer anzuordnen, so wie dies bei den bisher bekannten Schaltelementen der Fall war. Der Druckschalter ist somit vor Beschädigungen geschützt, seine elektrischen Anschlußleitungen können in geeigneter Weise verlegt werden, ohne daß Beschädigungen zu befürchten sind. Somit sind Störungen durch mechanische Einflüsse vollständig auszuschließen.

In einer besonders vorteilhaften Weiterbildung der Erfindung ist vorgesehen, daß das Schaltsignal einer Zählschaltung der Schalteinrichtung zugeführt wird. Mit Hilfe der Zählschaltung ist es möglich, daß nicht bei jedem Anheben eines der beiden Spurreißer eine Schaltung der Einrichtung zum Anlegen von Fahrgassen erfolgt. Es werden somit nicht bei jedem dieser Anhebevorgänge bestimmte Saatrohre geschlossen bzw. geöffnet. Die Fahrgassen können somit bei jeder zweiten oder dritten Fahrt angelegt werden, so daß das Anheben der Spurreißer durch die Zählschaltung gezählt werden kann. In Abhängigkeit von den jeweiligen Erfordernissen erfolgt somit nach jedem zweiten, dritten oder vierten Anheben eine Schaltung.

Bevorzugterweise ist der Druckschalter so eingestellt, daß das Schaltsignal kurz vor Erreichen des Maximaldruckes in dem Hydrauliksystem bei vollständigem Ausfahren des Hydraulikzylinders abgegeben wird. Da der einseitig wirkende Zylinder zur Betätigung der Spurreißer beim Anheben des jeweiligen inaktivierten Spurreißers zu dessen Verschwenkung um einen ganz bestimmten Winkel ganz ausgefahren ist, ergibt sich stets ein Druckanstieg auf den Maximaldruck des Hydrauliksystems. Dieser Maximaldruck wird erfindungsgemäß zur Betätigung der Fahrgassenschaltung genutzt. Es ist erfindungsgemäß somit ausgeschlossen, daß Druckschwankungen zu Fehlschaltungen führen. Vielmehr ist es möglich, den Schaltdruck beispielsweise mehr als 50 % höher als den Betriebsdruck der Spurreißer zu wählen, da zur Betätigung der Spurreißer kein sehr hoher Druck erforderlich ist. Druckschwankungen bzw. Druckstöße können somit keinesfalls Fehlschaltungen hervorrufen; somit ist eine erhöhte Betriebssicherheit gewährleistet.

Im folgenden wird die Erfindung anhand eines Ausführungsbeispieles in Verbindung mit der Zeichnung beschrieben. Dabei zeigt:

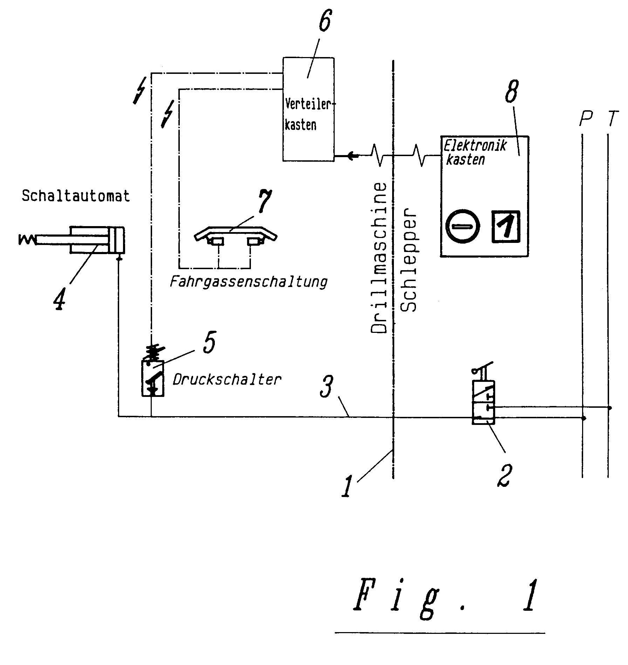

- Fig. 1: eine schematische Darstellung des Hydraulikschaltplanes des erfindungsgemäßen Ausführungsbeispieles.

Wie in Fig. 1 dargestellt, trennt die Trennlinie 1 in dem Hydraulikschaltplan den Schlepper (rechte Seite) von einer Drillmaschine (linke Seite der Fig. 1). Der Hydraulikkreis umfaßt ein schaltbares Hydraulikventil 2, welches mit seiner Zu- bzw. Ableitung an den üblichen Hydraulikkreis des Schleppers angeschlossen ist. Das Ventil 2 steht in Verbindung mit einer Leitung 3, welche wiederum mit einem Hydraulikzylinder 4 verbunden ist. Dieser Hydraulikzylinder 4 stellt einen Teil einer üblichen Umschalteinrichtung dar, mit Hilfe derer die nicht gezeigten Spurreißer aktiviert bzw. inaktiviert werden können. Da die Spurreißer und der zugehörige Klinkenmechanismus aus dem Stand der Technik bekannt sind, wird auf eine detaillierte Beschreibung verzichtet. Es wird beispielsweise auf die DE-OS 30 25 176 verwiesen.

In der Hydraulikleitung 3 ist ein Druckschalter 5 zwischengeschaltet, welcher bei Erreichen eines vorgegebenen Schaltdruckes ein Schaltsignal an einen Verteilerkasten einer Schalteinrichtung abgibt. Diese wiederum ist mit einer Fahrgassenschaltung 7 verbunden. Weiterhin steht der Verteilerkasten 6 der Schalteinrichtung in Betriebsverbindung mit einem Elektronikkasten 8 einer Steuer- und Schalteinrichtung des Schleppers. Bei einer Betätigung des Mehrwegeventiles 2 zur Umschwenkung der Spurreißer erfolgt somit eine Druckbeaufschlagung der Leitung 3 mit Hydraulikfluid, um den Hydraulikzylinder 4 zu betätigen. Diese Druckerhöhung führt bei vollständiger Verschiebung des Kolbens des Hydraulikzylinders 4 zu einem Druckanstieg in der Leitung 3 auf den möglichen Maximalwert. Dieser maximale Druckwert wird von dem Druckschalter 5 ermittelt. Dieser gibt ein Schaltsignal an den Verteilerkasten 8 der Schalteinrichtung ab, wodurch wiederum ein Schaltsignal an die Fahrgassenschaltung 7 abgegeben werden kann, möglicherweise unter Zwischenschaltung eines Zählwerkes.

Die Erfindung ist nicht auf das gezeigte Ausführungsbeispiel beschränkt. Vielmehr ergeben sich für den Fachmann im Rahmen der Erfindung vielfältige Abwandlungs- und Modifikationsmöglichkeiten.

Zusammenfassend ist folgendes festzustellen:
Die Erfindung bezieht sich auf eine Sämaschine mit einer Fahrgassenschaltung, mit mehreren selektiv schaltbaren Särohren und seitlichen, schwenkbar gelagerten Spurreißern, welche mittels einer hydraulisch betätigbaren Umschalteinrichtung verschwenkbar sind, wobei die Umschalteinrichtung mindestens einen Hydraulikzylinder (4) und eine Schalteinrichtung (6) umfaßt. Um das System einfach und betriebssicher ausbilden zu können und um Fehlbedienungen auszuschließen, ist vorgesehen, daß in einer Hydraulikleitung (3) zu dem Hydraulikzylinder (4) ein Druckschalter (5) angeordnet ist, welcher zur Abgabe eines Schaltsignales mit der Schalteinrichtung (6) verbunden ist, wodurch ein Schaltsignal an die Fahrgassenschaltung abgegeben werden kann.

## Patentansprüche

1. Sämaschine mit Fahrgassenschaltung, mit mehreren selektiv schaltbaren Särohren und seitlichen, schwenkbar gelagerten Spurreißern, welche mittels einer hydraulisch betätigbaren Umschalteinrichtung verschwenkbar sind, wobei die Umschalteinrichtung mindestens einen Hydraulikzylinder (4) und eine Schalteinrichtung (6) umfaßt, dadurch gekennzeichnet, daß in einer Hydraulikleitung (3) zu einem Hydraulikzylinder (4) ein Druckschalter (5) angeordnet ist, welcher zur Abgabe eines Schaltsignales mit der Schalteinrichtung (6) verbunden ist, wodurch ein Schaltsignal an die Fahrgassenschaltung abgegeben werden kann.

2. Sämaschine nach Anspruch 1, dadurch gekennzeichnet, daß das Schaltsignal einer Zählschaltung der Schalteinrichtung zugeführt wird.

3. Sämaschine nach Anspruch 1 oder 2, dadurch gekennzeichnet, daß das Schaltsignal des Druckschalters (5) bei Erreichen des Maximaldruckes in dem Hydrauliksystem bei vollständigem Ausfahren des Hydraulikzylinders (4) abgegeben wird.

4. Sämaschine nach einem der Ansprüche 1 bis 3, dadurch gekennzeichnet, daß der Schaltdruck des Druckschalters (5) mehr als 50 % über dem Betriebsdruck des Spurreißers liegt.

5. Sämaschine nach einem der Ansprüche 1 bis 4, dadurch gekennzeichnet, daß für die Betätigung der beiden Spureißer je ein getrennter Hydraulikkreislauf mit jeweils einem Druckschalter vorgesehen ist.

## Claims

1. A seed drill with a tramlining device and having a plurality of selectively switchable sowing pipes and lateral, pivotably mounted tracers which are pivotable by means of a hydraulically operable change-over means, wherein the change-over means comprises at least one hydraulic cylinder (4) and a switching means (6), **characterised in that** a pressure switch (5) is arranged in a hydraulic line (3) to a hydraulic cylinder (4) and is connected to the switching means (6) for the purpose of transmitting a switching signal, and a switching signal can thereby be transmitted to the tramlining device.

2. A seed drill according to Claim 1, **characterised in that** the switching signal is supplied to a counting circuit of the switching means.

3. A seed drill according to Claim 1 or 2, **characterised in that** the switching signal of the pressure switch (5) is transmitted on achieving the maximum pressure in the hydraulic system when the hydraulic cylinder (4) is fully extended.

4. A seed drill according to any of Claims 1 to 3, **characterised in that** the switching pressure of the pressure switch (5) is more than 50 % above the operational pressure of the tracer.

5. A seed drill according to any of Claims 1 to 4, **characterised in that** to actuate the two tracers, in each case a separate hydraulic circuit is provided with a respective pressure switch.

## Revendications

1. Semoir à changement de voie de circulation, comportant plusieurs tubes de semis pouvant être enclenchés de façon sélective et des traceurs latéraux montés orientables, que l'on peut faire pivoter au moyen d'un dispositif d'inversion, commandable hydrauliquement, étant entendu que le dispositif d'inversion comporte au moins un vérin hydraulique (4) et un dispositif de commutation (6),
caractérisé en ce que, dans une canalisation hydraulique (3) allant vers le vérin hydraulique (4), est disposé un manocontacteur (5), relié au dispositif de commutation (6) pour délivrer un signal d'inversion, ce signal d'inversion pouvant être envoyé au dispositif de changement de voie de circulation.

2. Semoir suivant la revendication 1, caractérisé en ce que le signal d'inversion est envoyé à un circuit de comptage du dispositif de commutation.

3. Semoir suivant la revendication 1 ou la revendication 2, caractérisé en ce que le signal d'inversion du manocontacteur (5) est émis lorsque la pression maximale est atteinte dans le système hydraulique, le vérin hydraulique (4) étant complètement sorti.

4. Semoir suivant l'une des revendications 1 à 3, caractérisé en ce que la pression de commutation du manocontacteur (5) est supérieure de plus de 50 % à la pression de fonctionnement du traceur.

5. Semoir suivant l'une des revendications 1 à 4, caractérisé en ce que, pour actionner les deux traceurs, il est prévu, pour chacun d'eux, un circuit hydraulique séparé, comportant chacun un manocontacteur.
